# EUROPÄISCHE PATENTANMELDUNG

(11) **EP 4 461 528 A1**
(43) Veröffentlichungstag der Anmeldung: **13.11.2024**
(21) Anmeldenummer: 23208470.7
(22) Anmeldetag: 08.11.2023
(51) Int. Cl.: B32B 15/00, B32B 21/00, B32B 27/00, C08J 7/04

(54) **THERMISCH ABLÖSBARE BESCHICHTUNG**

(30) Priorität: 08.05.2023 EP 23172024
(71) Anmelder: Adler-Werk Lackfabrik Johann Berghofer GmbH & Co KG, 6130 Schwaz (AT)
(72) Erfinder: RÖSSLER, Dr. Albert, 6130 Schwaz (AT); STRUBE, Prof. Dr. Oliver, 6091 Götzens (AT); HÖFER, Thomas, 6161 Natters (AT); KAMAUN, Rudolf, 6133 Weerberg (AT); GLÄTZLE, Dr. Matthias, 6020 Innsbruck (AT)
(74) Vertreter: Frick, Robert

(57) **Zusammenfassung**

Die Erfindung betrifft ein Verbundbauteil umfassend ein Substrat und eine Beschichtung, die eine Oberfläche des Substrats überdeckt, wobei zwischen der Beschichtung und der Oberfläche eine Zwischenschicht angeordnet ist, die einen Stoff enthält, der thermisch unter Gasentwicklung zersetzt werden kann. Die Erfindung betrifft ferner Verfahren zur Auftragung und Ablösung der Beschichtung, sowie ein Recyclingverfahren für das Verbundbauteil.

## Beschreibung

Die Erfindung betrifft eine Beschichtung, die durch thermische Aktivierung vom Substrat ablösbar ist, sowie Verfahren zu deren Auftragung und Ablösung.

Im Rahmen der Beschichtung von Substraten werden Beschichtungsstoffe, beispielsweise Lacke, dünn auf das Substrat aufgetragen und durch chemische oder physikalische Vorgänge zu einem durchgehenden Film, einer sogenannten Beschichtung aufgebaut. Die Beschichtungen dienen meist als dekoratives Gestaltungsmittel und zum Schutz der Substratoberfläche. In der Bau- und Möbelindustrie sowie der gewerblichen Verarbeitung werden zu diesen Zwecken in großem Maßstab unterschiedliche mineralische Werkstoffe, Holz- aber auch Glas-, Metall- und Kunststoffbauteile inkl. Kombinationen der Werkstoffe in Bauteilen beschichtet.

Die Wiederverwertung von beschichteten Bauteilen ist teilweise problematisch. Der Materialmix des Komposits macht ein üblicherweise auf Sortenreinheit ausgelegtes Recycling sehr aufwendig bzw. unmöglich. Beschichtete Holzbauteile werden daher beispielsweise oft als Sondermüll thermisch verwertet. Manchmal werden beschichtete Holzbauteile ohne Entfernung der Beschichtung zu Spänen zerkleinert und die Späne dann als Altholzanteil in Spanplatten verwendet. Dies ist aber nicht ideal, da die Beschichtungsreste einerseits die physikalischen und optischen Materialeigenschaften der Spanplatten bei höheren Altholzanteilen negativ beeinflussen, und andererseits bei der Holzverarbeitung Kunststoffpartikel entstehen.

Um eine Beschichtung vom Substrat zu entfernen, werden im Stand der Technik entweder chemische Abbeizmittel (z. B. WO 2006/088524 A1) oder Laserablation verwendet, oder die Schicht wird durch Schleifen oder Sandstrahlen mechanisch entfernt. Jedes dieser Verfahren weist jedoch einen kritischen ökonomischen und/oder gesundheits- bzw. umwelttechnischen Nachteil auf. Beim chemischen Abbeizen können der Verbrauch und die Freisetzung von schädlichen Chemikalien nicht vermieden werden. Beim mechanischen Entfernen entstehen feine Kunststoffpartikel, die eine Schutzausrüstung beim Arbeiten zwingend notwendig machen. Zudem erschweren komplexe Geometrien den Ablauf. Bei der Laserablation entstehen für Umwelt und Gesundheit kritischer Feinstaub und durch die partielle Pyrolyse teilweise auch toxische Gase. Der apparative Aufwand ist zudem sehr hoch und komplexe Geometrien können nur schwer bearbeitet werden. Zudem können bei all diesen Verfahren die abgelösten Beschichtungen nicht werterhaltend genutzt werden, da keine großflächige Ablösung von intakten Beschichtungen, z. B. Lackfilmen, stattfindet kann.

Im Stand der Technik (z. B. WO 2022/216904 A1) sind auch Beschichtungen enthaltend thermisch expandierbare Stoffe wie Graphit, Vermiculite oder polymere Kapseln bekannt, deren Haftung nachträglich durch Expansion der Zusatzstoffe bei Hitzeeinwirkung geschwächt werden können, um Materialien wieder voneinander trennen zu können.

Im Falle von Klebstoffen sind auch thermisch gasbildende Komponenten wie blockierte Isocyanate bekannt, die zu Blasen im Werkstoff führen. Die entstehende Porosität kann dann zur Trennung der Klebeverbindung genützt werden. Die Trennung erfolgt allerdings weder rückstandsfrei noch vollständig, da die Fehlstellen nur im Material verteilt, aber nicht kontinuierlich auftreten (z. B. Gorsche, C. et al., Macromolecules 2018, 51, 660-669).

In der US 2009/017248 A1 wir eine Schicht von thermisch unter Gasentwicklung zersetzbaren Stoffen in der Herstellung von Halbleitern zum Lösen von Halbleiterschichten verwendet.

Die JP H06-246226 A offenbart ein Verfahren zur Herstellung eines Verbundbauteils umfassend ein Substrat und eine Beschichtung, die eine Oberfläche des Substrats überdeckt. Zwischen der Beschichtung und der Oberfläche ist eine Zwischenschicht angeordnet, die einen oder mehrere thermisch zersetzbare Stoffe in einer Polymermatrix enthält. Durch die Polymermatrix verbleiben nach einer thermischen Zersetzung und Ablösung der Schicht einige Rückstände sowohl am Substrat als auch an der Beschichtung, die ein Recycling erschweren.

Aufgabe der Erfindung ist es, eine Beschichtung vorzuschlagen, welche ohne die Nachteile bekannter Verfahren von einem Substrat abgelöst werden kann.

Vor diesem Hintergrund betrifft die Erfindung ein Verbundbauteil umfassend ein Substrat und eine Beschichtung in Form eines Lackes, die eine Oberfläche des Substrats überdeckt. Erfindungsgemäß ist zwischen der Beschichtung und der Oberfläche eine Zwischenschicht angeordnet, die einen oder mehrere thermisch zersetzbare Stoffe enthält, die thermisch unter Gasentwicklung zersetzt werden können. Eine thermische Zersetzung unter Gasentwicklung bedeutet, dass sich ein vormals fester Stoff unter Bildung zumindest eines gasförmigen Spaltprodukts chemisch zersetzt. Der Anteil der thermisch zersetzbaren Stoffe in der Zwischenschicht ist größer als 50 Gew.-%. Mit anderen Worten umfasst die Zwischenschicht neben den thermisch zersetzbaren Stoffen möglichst wenige andere Stoffe, also möglichst wenige Bindemittel, Polymeranteile oder dergleichen. Hintergründig ist, dass nach einer thermischen Zersetzung der resultierenden Zwischenschicht möglichst wenig Rückstände der zersetzten Schicht an der Beschichtung bzw. der Substratoberfläche verbleiben sollen.

Die Zersetzung der Zwischenschicht ermöglicht eine einfache Separation des Substrats und der Beschichtung. Die Haftung der Beschichtung am Substrat wird bei geeigneter Wahl der Art und Schichtdicke der Zwischenschicht nicht oder zumindest nicht wesentlich negativ beeinflusst. Ohne thermische Aktivierung (Trigger) der Zwischenschicht besitzt die Beschichtung somit eine vergleichbare Haftfestigkeit zum Auftrag ohne Zwischenschicht. Bei thermischer Aktivierung, deutlich oberhalb des typischen Gebrauchsniveaus, wird die Haftfestigkeit innerhalb kurzer Zeit aber stark genug reduziert, um die Beschichtung problemlos von der Holzoberfläche zu lösen. Die entstehenden Gase bilden dabei Blasen und unterstützen eine Ablösung der Beschichtung. Die Aktivierung erfolgt rein thermisch ohne den Einsatz von gesundheits- oder umweltschädlichen Chemikalien. Der Mechanismus kann unabhängig von der Geometrie des Werkstoffes zum Einsatz kommen. Entstehende Gase sind im Gegensatz zu Gasen, die bei einer Laserablation entstehen können, weitgehend unbedenklich.

Die Zwischenschicht ist in einer Ausführungsform direkt an der Oberfläche des Substrats aufgetragen und bildet eine Grundierung. So verbleibt nach der Trennung kein oder nur wenig Fremdmaterial an der Oberfläche des Substrats und die Beschichtung kann im Wesentlichen vollständig vom Substrat entfernt werden.

In einer anderen Ausführungsform ist die Zwischenschicht zwischen zwei Schichten einer zwei- oder mehrschichtigen Beschichtung angeordnet und stellt eine Trennschicht dar, die eine Trennung von Schichten einer zwei- oder mehrschichtigen Beschichtung erlaubt.

Die Herstellung des erfindungsgemäßen Verbundbauteils erfolgt durch Auftragung der Zwischenschicht direkt auf die Oberfläche des Substrats oder eine Schicht einer zwei- oder mehrschichtigen Beschichtung am Substrat, gefolgt von einer Auftragung der Beschichtung oder einer weiteren Schicht einer zwei- oder mehrschichtigen Beschichtung.

Vor dem Hintergrund des Bestrebens, dass nach einer thermischen Zersetzung der resultierenden Zwischenschicht möglichst wenig Rückstände der zersetzten Schicht an der Beschichtung bzw. der Substratoberfläche verbleiben sollen, ist der Anteil der thermisch zersetzbaren Stoffe in der Zwischenschicht vorzugsweise größer als 70 Gew.-%, weiter vorzugsweise größer als 90 Gew.-%, weiter vorzugsweise größer als 95 Gew.-% oder gar größer als 98 Gew.-%.

Die Zwischenschicht kann durch Auftragung einer Formulierung der thermisch zersetzbare Stoffe in Wasser oder in einem organischen Lösungsmittel realisiert werden. Alternativ können lösungsmittelfreie Formulierungen oder Pulverlacke zur Herstellung der Zwischenschicht verwendet werden. Die Formulierung kann zudem noch weitere Additive wie etwa Bindemittel, Weichmacher, Farbstoffe, Filmbildehilfsmittel, Pigmente oder Füllstoffe enthalten. Weitere geeignete Hilfsmittel sind Verlaufsmittel, Entschäumer, Biozide und Verdicker. Der Anteil der thermisch zersetzbaren Stoffe an den nichtflüchtigen Bestandteilen der Formulierung ist, entsprechend der Zielsetzung, in der Zwischenschicht einen Anteil der thermisch zersetzbaren Stoffe von größer als 50 Gew.-% zu haben, möglichst groß und dabei, korrespondierend, größer als 50 Gew.-%, vorzugsweise größer als 70 Gew.-%, weiter vorzugsweise größer als 90 Gew.-%, weiter vorzugsweise größer als 95 Gew.-% oder gar größer als 98 Gew.-%.

Die Herstellung der Formulierung zur Bildung der Zwischenschicht kann in bekannter Weise durch Abmischen der Komponenten in hierfür üblichen Mischvorrichtungen erfolgen.

Die Zwischenschicht,die Beschichtung und eine optionale weitere Schicht einer mehrschichtigen Beschichtung können jeweils durch alle bekannten Auftragungsarten aufgetragen werden. Bevorzugte Beispiele umfassen ein Aufspritzen, Aufrakeln, Aufwalzen, Vacumat^{®}-Technologie, Tauchen, Gießen Rollen oder Aufstreichen sowie Drucktechnologien wie Flexo- oder Siebdruck oder digitale Applikationstechnologien wie das Tintenstrahl-, Aerosoljet- oder Magnetventil-Verfahren.

Die Zwischenschicht ist vorzugsweise so ausgebildet bzw. die thermisch zersetzbaren Stoffe vorzugsweise so gewählt, dass eine Zersetzung nicht unterhalb einer Temperatur von 100 °C oder 130 °C stattfindet. So kann eine ungewollte Ablösung der Beschichtung bei normalen Gebrauchstemperaturen der meisten Bauteile vermieden werden. Andererseits kann vorteilhaft sein, dass die Zersetzungstemperatur nicht zu hoch liegt, also unterhalb beispielsweise 200 °C oder 180 °C liegt, sodass bei den Aktivierungstemperaturen das Substrat oder die Beschichtung nicht angegriffen werden.

Die Dicke der Zwischenschicht kann in einer Ausführungsform zwischen 1 µm und 200 µm betragen. Bevorzugte Bereiche, in denen das entwickelte Gasvolumen ausreichend, die Schicht aber nicht exzessiv dick ist, umfassen 5 µm bis 100 µm.

Bei der Beschichtung handelt es sich um einen Lack. Dabei kann das Lacksystem grundsätzlich unterschiedlicher chemischer Basis sein. Beispiele umfassen physikalisch härtende Lacke wie Dispersionslacke, Polyvinyllacke, Schellack, Celluloselacke und chemisch härtende oder strahlungsvernetzende Lacke wie gesättigte und ungesättigte Polyester-, Alkyd-, Epoxid-, Harnstoff-Formaldehyd-, Phenolharz-, Polyurethan-, Acryl-, Silikat- oder Silikonharzlacke. Das Lacksystem kann lösungsmittelfrei sein oder auch ein Pulverlack, kann aber auch ein beliebiges Lösungsmittelsystem aufweisen, beispielsweise Wasser. Der Lackaufbau kann einschichtig oder mehrschichtig sein. Zudem kann das Lacksystem transparent, transluzent oder auch deckend pigmentiert sein.

In einer Ausführungsform handelt es sich bei dem Substrat um Vollholz, Holzformteile, einen Holzwerkstoff, Laminate, mineralische Substarte wie Kalk, Kalk-Zement, Gips, Laminatfolien beispielsweise aus Polyethylenterephalat oder Polyvinylchlorid, Kunststoff- oder Schichtstoffpatten (wie HPL oder CPL) oder Metall-, Glas-, sowie Kunststoffbauteile beispielsweise aus Acrylnitril-Butadien-Styrol-Copolymeren, Polyvinylchlorid, Polypropylen oder Polymethylmethacrylat. Weitere Beispiele umfassen Holz-Kunststoff-Verbundwerkstoffe (WPC), welche z. B. einen thermoplastischen Kunststoff wie Acrylnitril-Butadien-Styrol (ABS), Polyamide (PA), Polylactat (PLA), Polymethylmethacrylat (PMMA), Polycarbonat (PC), Polyethylenterephthalat (PET), Polyethylen (PE), Polypropylen (PP), Polystyrol (PS), Polyetheretherketon (PEEK) und Polyvinylchlorid (PVC), Zelluloid, oder Kombinationen daraus aufweisen können. Typische Holzwerkstoffe sind unter anderem Spanplatten, Hartfaserplatten, mitteldichte Faserplatten, OSB-Platten, etc. Der Träger kann direkt verwendet werden oder vor dem Aufbringen des Lacks weiterbearbeitet werden. Beispielsweise kann der Werkstoff je nach späterer Anwendung zusätzlich ein Holzfurnier, eine Papierfolie, eine Melaminfolie, etc. umfassen, auf die der Beschichtungsstoff aufgetragen werden kann.

In einer bevorzugten Ausführungsform handelt es sich bei dem erfindungsgemäßen Verbundbauteil um ein mit Furnier veredeltes Bauteil oder ein Vollholzbauteil.

Bei den thermisch zersetzbaren Stoffen kann es sich insbesondere um thermisch zersetzbare Polymere handeln.

In einer Ausführungsform handelt es sich bei den thermisch zersetzbaren Stoffen um Celluloseether wie Carboxymethylcellulose (CMC) oder Ethylcellulose (EC), sowie Celluloseester wie Cellulosenitrate und Celluloseacetate. Besonders bevorzugt ist dabei Nitrocellulose, also der Nitratester der Cellulose. Beispielsweise kann Nitrocellulose mit einem Nitrierungsgrad von weniger als 12,6 %, vorzugsweise von zwischen 11,8 % und 12,3 % verwendet werden. Dies liegt unterhalb der sogenannten Sprengstoffgrenze und hat sich in Versuchen als besonders geeignet erwiesen. Ab einer Temperatur von ca. 160 °C spaltet die Nitrocellulose schnell und vollständig Stickoxide ab. Durch die geringen Schichtdicken sind die Mengen an freigesetzten Stickoxiden gering.

In einer Ausführungsform handelt es sich bei den thermisch zersetzbaren Stoffen um thermoplastische Copolymere aus der Gruppe der Polycarbonate bzw. ein Poly(alkylencarbonat) wie z. B. Polypropylencarbonat (PPC). Poly(alkylencarbonat) zerfällt unter Bildung von Kohlendioxid (CO₂). Die Zerfallstemperatur liegt abhängig von u. a. Molekulargewicht und Stereoisomerie sowie abhängig von der Heizrate bei Temperaturen zwischen etwa 180 °C und 240 °C, wobei die Zerfallstemperaturen durch Katalysatorzusatz auch verringert werden können. Ein Vorteil von Poly(alkylencarbonat) liegt insbesondere in dem Umstand, dass die Zerfallsprodukte ungiftig sind.

Die Erfindung bietet eine Möglichkeit, lackierte Holzsubstrate der Kreislaufwirtschaft zuzuführen. Zum einen kann das Holz umweltfreundlich aufgearbeitet und weiterverwendet werden, zum anderen kann die Beschichtung bei gutem Zustand in Folienform oder bei schlechtem Zustand in einem Downcyclingprozess weiter genutzt werden.

Weiterhin betrifft die Erfindung ein Verfahren zur Trennung des Substrats und der Beschichtung an einem erfindungsgemäßen Verbundbauteil, wobei das Verbundbauteil zumindest oberflächlich erhitzt wird, vorzugsweise auf eine Temperatur von zwischen 100 °C und 240 °C, vorzugsweise zwischen 130 °C und 180 °C, um die thermisch zersetzbaren Stoffe der Zwischenschicht unter Gasentwicklung zu zersetzen, und wobei die Beschichtung anschließend mechanisch von der Oberfläche des Substrats entfernt wird. Das Entfernen kann ein Abziehen der Beschichtung, falls diese unbeschädigt und ausreichend stabil bzw. flexibel ist, oder andernfalls ein Abkratzen oder Abbürsten umfassen.

Die voneinander getrennten Elemente, also die Beschichtung einerseits und das Substrat andererseits, können jeweils für sich genommen entsorgt oder einem Recyclingkreislauf zugeführt werden. Insofern betrifft die Erfindung auch ein Verfahren zur Wiederverwertung der Beschichtung und/oder des Substrats eines erfindungsgemäßen Verbundbauteils, wobei die Beschichtung und das Substrat anhand eines erfindungsgemäßen Verfahrens getrennt und dann separat einem Recyclingkreislauf zugeführt werden.

Weitere Einzelheiten und Vorteile der Erfindung ergeben sich aus dem nachfolgend beschriebenen Ausführungsbeispiel. In den Figuren zeigt:
- Figur 1:: einen schematischen Aufbau eines erfindungsgemäßen Verbundbauteils;
- Figur 2:: ein Foto des Resultats einer Trennung von Substrat und Beschichtung in einem Ausführungsbeispiel;
- Figur 3:: Fotos der Ergebnisse eines Posi-Tests nach DIN EN ISO 4624:2016-08, in dem das Abziehen der Beschichtung in erfindungsgemäßen Verbundbauteilen vor und nach einer thermischen Aktivierung getestet wurde;
- Figur 4:: ein Diagramm der Kraftmesswerte aus diesen Tests; und
- Figur 5:: eine schematische Darstellung eines beispielhaften Ablaufs eines erfindungsgemäßen Verfahrens zur Wiederverwertung der Beschichtung und des Substrats eines erfindungsgemäßen Verbundbauteils.

Eine Zusammensetzung zur Bildung einer Zwischenschicht mit den Inhaltsstoffen gemäß Tabelle 1 wird nach einer 1:1 Verdünnung mit n-Butylacetat durch Spritzapplikation (Airmix-Technologie) in einer Nassschichtstärke von 200 µm auf ein Fichtenfurnier auf Spanplatte aufgetragen und einen Tag an der Luft bei Raumtemperatur getrocknet.

**Tabelle 1**

| **Stoff** | **Gewichtsanteile / %** |
|---|---|
| i-Butylacetat | 35,0 |
| Nitrocellulose (11,8-12,3 %N) | 25,0 |
| n-Butylacetat | 20,0 |
| Ethanol | 15,0 |
| Aceton | 5,0 |
| Summe | 100 |

Anschließend wird ein acrylatbasierter 2K-Wasserlack, ebenfalls durch Spritzapplikation (Airmix-Technologie) in einer Nassschichtstärke von 200 µm, aufgetragen und 4 Stunden an der Luft bei Raumtemperatur getrocknet. Letztlich wird ein wasserbasierter 2K-Acryl-Decklack, wiederum durch Spritzapplikation (Airmix-Technologie) in einer Nassschichtstärke von 200 µm, aufgetragen und 5 Tage an der Luft bei Raumtemperatur getrocknet.

Das so beschichtete Fichtenfurnier wird für einen Monat unter Normklima, also bei 23 °C und 50 %rH gelagert.

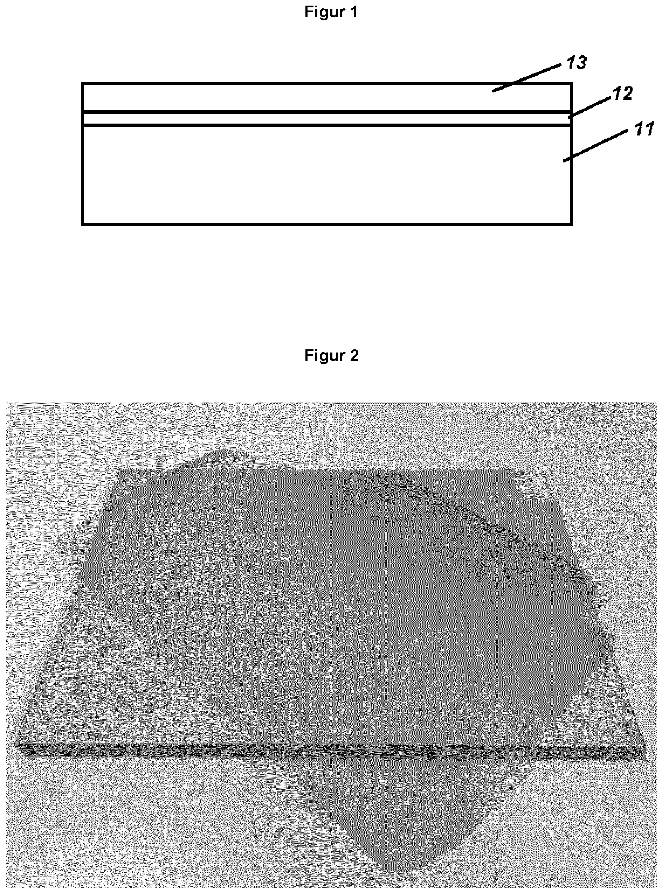

Figur 1 zeigt einen schematischen Aufbau eines derartigen Verbundbauteils, in dem die Oberfläche des Holzsubstrats 11 von einem (im vorliegenden Ausführungsbeispiel zweischichtigen) Decklack 13 überzogen ist, wobei sich zwischen der Oberfläche des Substrats 11 und dem Decklack 13 eine Zwischenschicht 12 befindet, die einen thermisch unter Gasentwicklung zersetzbaren Stoff (im Ausführungsbeispiel Nitrocellulose) aufweist.

Anschließend erfolgt eine Aktivierung der Zwischenschicht durch Erhitzen des beschichteten Furniers auf 165 °C im Trockenschrank für 10 min. Nach einer Abkühlung auf Raumtemperatur wird die durch Blasenbildung bereits sichtlich gelöste Lackschicht, bestehend aus Basislack und Decklack, als Folie vom Furnier abgezogen. Das Resultat ist im Foto der Figur 2 dargestellt.

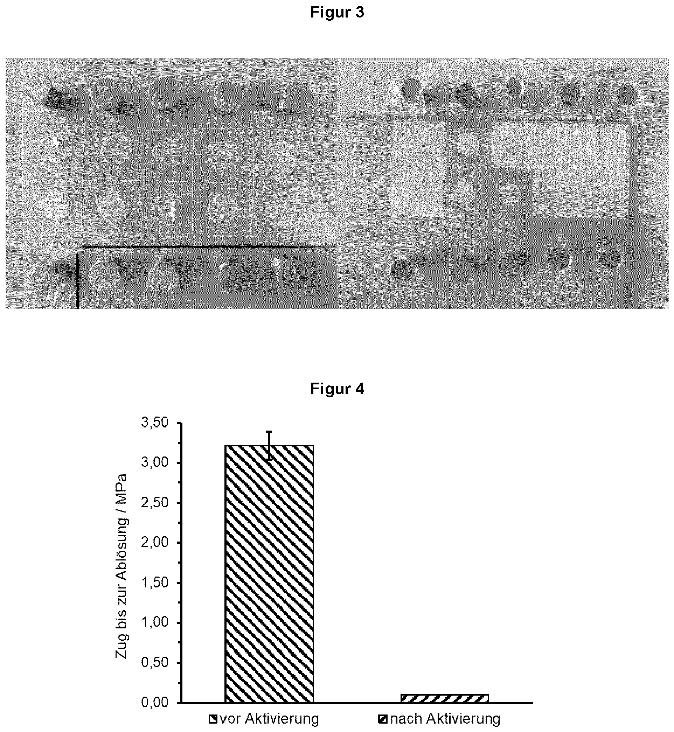

Im Rahmen eines Posi-Tests nach DIN EN ISO 4624:2016-08 (Aufbau nach Abschnitt 8.4.2) wurde ein quantitativer Vergleich der Haftung der Lackschicht vor und nach der thermischen Aktivierung gemacht. Vor Aktivierung kam es durchwegs zu einem Kohäsionsbruch im Holzsubstrat, während die Haftfestigkeit nach Aktivierung unterhalb der Bestimmungsgrenze des Messgerätes lag. Figur 3 zeigt eine bildliche Darstellung des Testergebnisses, wobei die linke Seite den Test vor und die rechte Seite den Test nach der Aktivierung zeigt. Figur 4 zeigt die entsprechenden Messungen der Ablösekräfte.

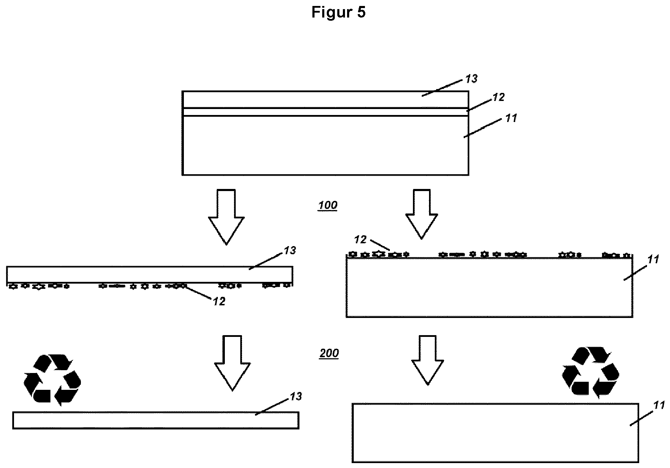

In Figur 5 ist letztlich schematisch ein erfindungsgemäßes Verfahren zur Wiederverwertung der Beschichtung und des Substrats des Verbundbauteils dargestellt. In einem ersten Schritt 100 erfolgt eine wie beschriebene Trennung des Substrats 11 von der Deckschicht 13 durch thermische Aktivierung der Zwischenschicht 12 und Abziehen der Deckschicht 13 vom Substrat 11. Anschließend werden das Substrat 11 und die Deckschicht 13 in einem Schritt 200 separat aufbereitet und jeweils einem Recyclingkreislauf zugeführt.

## Patentansprüche

1. Verbundbauteil umfassend ein Substrat und eine Beschichtung in Form eines Lacks, die eine Oberfläche des Substrats überdeckt, wobei zwischen der Beschichtung und der Oberfläche eine Zwischenschicht angeordnet ist, die einen oder mehrere thermisch zersetzbare Stoffe enthält, die thermisch unter Gasentwicklung zersetzt werden können,
**dadurch gekennzeichnet,**
**dass** der Anteil der thermisch zersetzbaren Stoffe in der Zwischenschicht größer als 50 Gew.-% ist.

2. Verbundbauteil nach Anspruch 1, **dadurch gekennzeichnet, dass** die Zwischenschicht direkt an der Oberfläche des Substrats aufgetragen ist und eine Grundierung bildet.

3. Verbundbauteil nach Anspruch 1, **dadurch gekennzeichnet, dass** die Zwischenschicht zwischen zwei Schichten einer zwei- oder mehrschichtigen Beschichtung angeordnet ist und eine Trennschicht darstellt.

4. Verbundbauteil nach einem der vorhergehenden Ansprüche, **dadurch gekennzeichnet, dass** die thermisch zersetzbaren Stoffe so ausgebildet sind, dass deren Zersetzung und Gasentwicklung bei Temperaturen von zwischen 100 °C und 240 °C, vorzugsweise zwischen 130 °C und 180 °C einsetzt.

5. Verbundbauteil nach einem der vorhergehenden Ansprüche, **dadurch gekennzeichnet, dass** die Dicke der Zwischenschicht zwischen 1 µm und 200 µm vorzugsweise zwischen 5 µm und 100 µm beträgt.

6. Verbundbauteil nach einem der vorhergehenden Ansprüche, **dadurch gekennzeichnet, dass** der Anteil der thermisch zersetzbaren Stoffe in der Zwischenschicht größer als 70 Gew.-%, vorzugsweise größer als 90 Gew.-%, weiter vorzugsweise größer als 95 Gew.-% und weiter vorzugsweise größer als 98 Gew.-% ist..

7. Verbundbauteil nach einem der vorhergehenden Ansprüche, **dadurch gekennzeichnet, dass** es sich bei dem Substrat um ein Holz-, Glas-, Metall- oder Kunststoffbauteil handelt.

8. Verbundbauteil nach einem der vorhergehenden Ansprüche, **dadurch gekennzeichnet, dass** es sich bei den thermisch zersetzbaren Stoffen um thermisch zersetzbare Polymere handelt, insbesondere Nitrocellulose oder ein Poly(alkylencarbonat).

9. Verfahren zur Herstellung eines Verbundbauteils nach einem der vorhergehenden Ansprüche, wobei die Zwischenschicht auf die Oberfläche des Substrats oder eine Schicht einer zwei- oder mehrschichtigen Beschichtung am Substrat aufgetragen wird, gefolgt von einer Auftragung der Beschichtung oder einer weiteren Schicht einer zwei- oder mehrschichtigen Beschichtung, wobei die Zwischenschicht durch Auftragung einer Formulierung gebildet wird, welche den oder die thermisch zersetzbaren Stoffe in einem wässrigen oder organischen Lösungsmittel enthält, wobei der Anteil der thermisch zersetzbaren Stoffe an den nichtflüchtigen Bestandteilen der Formulierung größer als 50 Gew.-% ist.

10. Verfahren nach Anspruch 9, **dadurch gekennzeichnet, dass** die Zwischenschicht und/oder die Beschichtung und/oder die weitere Schicht aufgespritzt, aufgewalzt, aufgestrichen oder aufgedruckt werden.

11. Verfahren nach Anspruch 9 oder 10, **dadurch gekennzeichnet, dass** der Anteil der thermisch zersetzbaren Stoffe an den nichtflüchtigen Bestandteilen der Zusammensetzung größer als 70 Gew.-%, vorzugsweise größer als 90 Gew.-%, weiter vorzugsweise größer als 95 Gew.-% und weiter vorzugsweise größer als 98 Gew.-% ist.

12. Verfahren zur Trennung des Substrats und der Beschichtung an einem Verbundbauteil nach einem der Ansprüche 1 bis 8, wobei das Verbundbauteil zumindest oberflächlich erhitzt wird, um die thermisch zersetzbaren Stoffe der Zwischenschicht unter Gasentwicklung zu zersetzen, und wobei die Beschichtung anschließend mechanisch von der Oberfläche des Substrats entfernt wird.

13. Verfahren nach Anspruch 12, **dadurch gekennzeichnet, dass** das Verbundbauteil zumindest oberflächlich auf eine Temperatur von zwischen 100 °C und 240 °C, vorzugsweise zwischen 130 °C und 180 °C erhitzt wird.

14. Verfahren nach Anspruch 12 oder 13, **dadurch gekennzeichnet, dass** die Beschichtung abgezogen wird.

15. Verfahren zur Wiederverwertung der Beschichtung und/oder des Substrats eines Verbundbauteils gemäß einem der Ansprüche 1 bis 8, wobei die Beschichtung und das Substrat anhand eines Verfahrens gemäß Anspruch 13 getrennt und dann separat einem Recyclingkreislauf zugeführt werden.
